# EUROPEAN PATENT SPECIFICATION

(11) **EP 2 668 121 B1**
(45) Date of publication and mention of the grant of the patent: **17.08.2016**
(21) Application number: 12706685.0
(22) Date of filing: 27.01.2012
(51) Int. Cl.: B65G 17/34, B65G 23/22, B65G 35/06

(54) **CONVEYOR**
FÖRDERBAND
CONVOYEUR

(30) Priority: 28.01.2011 IT MI20110110
(43) Date of publication of application: 04.12.2013
(73) Proprietor: Mechanica Sistemi S.r.L., 20037 Paderno Dugnano (MI) (IT)
(72) Inventor: CRISTOFORETTI, Giorgio, I-21100 Varese (IT)
(74) Representative: Ponzellini, Gianmarco
(86) International application number: PCT/IB2012/050386
(87) International publication number: WO 2012/101603

(56) References cited:
- EP-A1- 1 232 967
- EP-A1- 1 491 466
- EP-A2- 1 057 755
- EP-A2- 1 375 390
- WO-A1-97/15514
- WO-A1-2005/019069
- CA-A1- 2 470 607
- DE-A1- 19 948 064
- NL-A- 9 800 010

## Description

### FIELD OF THE INVENTION

The present invention relates to a conveyor; in particular, the present invention is principally applicable in the sector of automated handling systems for items, for example for the handling (for example for the purposes of delivery or claiming) of baggage or packages, particularly in airports and similar facilities. In any case, the conveyor described herein below is also applicable in the industrial sector, where it can be utilized for handling finished products or products being manufactured and moved towards additional processing stations. One application in the industrial sector could be the handling of products on production lines, or transferring objects from one production area to another.

### BACKGROUND OF THE INVENTION

As is known, there are many handling systems on the market and in use, capable of conveying objects such as baggage, packages or other items, and utilized in the services sector and in the industrial sector. A first example of prior art relates to a handling system comprising a conveyor belt consisting of a plurality of flat elements arranged consecutively to define a continuous articulated conveying surface suitable for receiving in a resting position the objects to be handled; each one of the flat resting surface elements is engaged on a respective element of a drawing chain that is moved by means of a plurality of driving wheels. The wheels drag by means of friction (directly or preferably by means of the interpositioning of an additional continuous belt) the chain, consequently moving the principal conveyor belt; the wheels are activated by means of an electric motor and a respective transmission. The system also has one or more auxiliary control wheels, which are also active on the chain, guaranteeing contact between the chain itself and the driving wheels. One of the drawbacks noted in the state of the art mentioned above and now widespread particularly in airports is related to the fact that the form (shape) of the chain and the wheels and in detail, also the type of coupling between the elements themselves, do not allow for controlling/changing the thrust force on the conveyor belt, which, understandably, varies its drag resistance according to changes in the load resting on it. The above proves to be a considerable drawback in that the resistance offered to motion, mainly related to the fact that the load positioned on the conveyor belt is extremely and also continually variable following baggage loading/unloading operations; this leads to the consequent generation of variable resistance forces when in operation. The unpredictability of the resistance, particularly upon start-up, that is, when the motor is started, owing to the variation in the forces in play, leads to the necessity of installing motors with high starting torques capable of ensuring movement of the conveyor belt in any situation. Therefore, in general the motor must be oversized for most of the normal conveyor operations for which decidedly lower powers would be sufficient. Obviously the choice of the motor and the respective transmissions involves an overall rise in the costs of the plant. For the purpose of overcoming at least partially the drawbacks described, a second example of a conveyor is known (see document US 6253910 B1), relating to a sorting device (not for airport facilities) guided along an operative line and driven by means of a conveyor system. The conveyor system is made up of a chain that has a series of mobile chain links interconnected in an articulated manner so as to permit relative movements between the chain links themselves, making it possible to follow curved paths at least on a horizontal plane and generally also in a vertical direction. The conveyor system is driven by means of friction wheels, which, by transmitting motion by friction to the underside of the chain, permit movement of the carousel (closed-path conveyor belts). The motive power is generated by an electric motor, fixed onto a support structure and connected by means of a cantilevered transmission to the friction wheels. The wheels are configured so as to rotate about the axis thereof and transmit the motion to the chain; the support structure of the wheels themselves is also configured so as to permit an overall tilting motion about an additional and different axis with respect to the frame and the motor. In other words, each one of the wheels, during use, has its respective rotation axis oscillating about a different fulcrum, making it possible to vary the pressure of contact between the drawing wheels and chain. In this second example, in keeping with the prior art, the adoption of an automatic system for regulating the pressure of contact between the wheel and the chain permits better management of the thrust force exerted on the belt upon variations in the resistance force and thus correct dimensioning of (by reducing) the power of the motor to be installed. In other words, movement of the contact surface of the thrust wheel towards/away from the chain involves a change in the force generated by friction between the wheel and chain. Yet the configuration adopted in such document entails that the nearing/distancing motion of the drawing wheel in relation to the belt is such that it generates misalignments in planarity at the contact between the external cylindrical surface of the wheel and the flat surface of the various elements of the chain. In other words, in its nearing/distancing motion, the wheel has an inclined rotation axis with respect to the contact surface; moreover, such inclination changes, increasing or decreasing, following nearing/distancing movements of the wheel caused by variations in the resistance load. The changes in the contact surface between the wheel and belt cause wear that is not uniform on the external surface of the friction wheel, which over time brings about a deformation of the external surface of the wheel, which is thus destined to lose its planarity. In addition to requiring greater maintenance and continuous checking of the system, resulting in an increase in the costs of maintenance, the uneven wear of the wheel also acts in such a way as to create uneven thrust and stresses that vary and are unpredictable throughout the entire system (particularly on the transmission chain), which is thus more prone to stress and malfunctioning. As a further result, this particular problem can lead to non-uniformity in the movement of the conveyor belt, generating irritating vibrations or undesired jerks during advancement movement.

A third example of a conveyor is known from document EP 1 232 967 A1 and relates to a conveyor according to the preamble of claim 1 and made up of a plurality of carriage movable along a predetermined closed travel path. Each carriage is defined by a support plane configured to receive a product to be transported; carriage also includes a plurality of bars, one for each support plane, fitted on the underside of said plane and having a series of mobile links interconnected in an articulated manner so as to permit relative movements between the links themselves: making possible the carriage to follow curved path. The conveyor system is driven by means of propulsion device having an electrical motor and a friction wheel; the motor guides the wheel in rotation and this latter transmits the motion to the bars (consequently to the carriage) along the closed path. More in detail, each bar has a corresponding portion abutted to the friction wheel and configured to cooperate with this latter. The electric motor is fixed onto a support structure and jointly connected to the friction wheels. The wheel is configured so as to rotate about an axis and transmit the motion to the bar; the support structure, together with said motor and said wheel, is configured so as to permit an overall tilting motion about an additional and different axis with respect to the frame and the motor.

### OBJECT OF THE INVENTION

An initial object of the present invention is to obviate one or more of the limitations and/or drawbacks described hereinabove. A further object is to enable the system to have a correct dimensioning of the installed power for driving the entire system. An additional object is to improve the configuration of the elements making up the conveyor so as to increase thrust efficiency, increase the duration (useful life) of the entire plant and decrease installation and maintenance costs. Yet another object is to make available a conveyor provided with a compact and extremely functional drawing system.

### SUMMARY

One or more of the indicated objects are achieved by the conveyor according to the invention, as claimed in claim 1 and its appended claims.

### BRIEF DESCRIPTION OF THE DRAWINGS

Several embodiments and several aspects of the invention are described herein below with reference to the appended drawings, which are provided solely by way of illustrative and thus non-limiting example, in which:
- Figure 1 is a view from above, with some elements removed, illustrating a conveyor in accordance with a first aspect of the invention;
- Figure 2a is a perspective view illustrating a portion of a conveyor in accordance with a second embodiment described herein below;
- Figure 2b illustrates the movement system adopted in Figure 2a;
- Figure 2c shows the movement system of Figure 2b seen from above;
- Figure 3 shows a lateral section of the conveyor of Figure 1 according to plane III-III of Figure 1;
- Figure 4 shows a lateral section according to plane IV-IV of the conveyor shown in Figure 1;

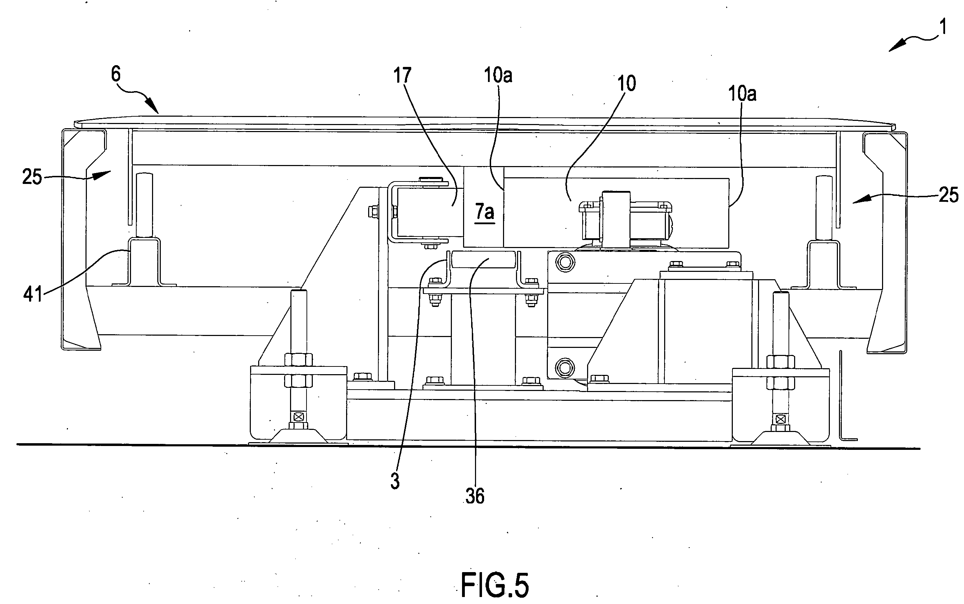

- Figure 5 is a lateral view of the conveyor shown in Figure 1;

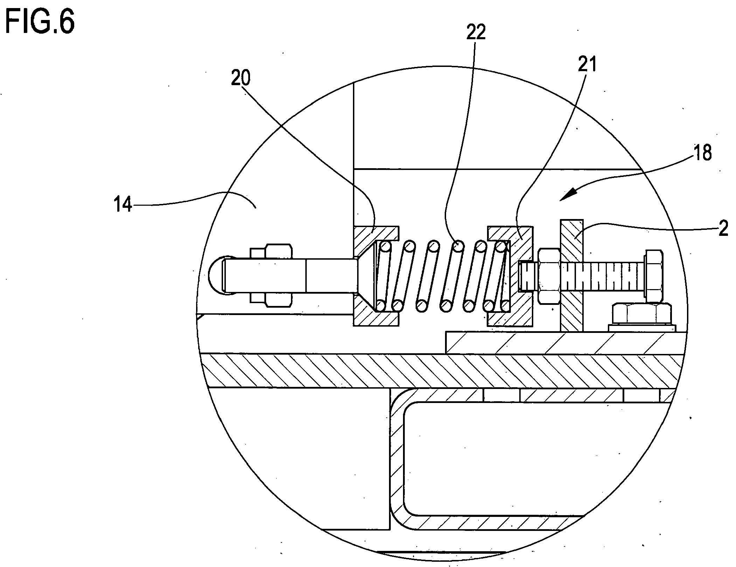

- Figure 6 shows a detail of the connection means utilized in the conveyor as it appears in Figure 1;
- Figure 7 illustrates two of a plurality of discrete bodies suitable for defining the drawing element; and
- Figures 8, 9 and 10 are schematic views showing some conveyors suitable for handling items along different paths that develop on the plane and in the space.

### DETAILED DESCRIPTION

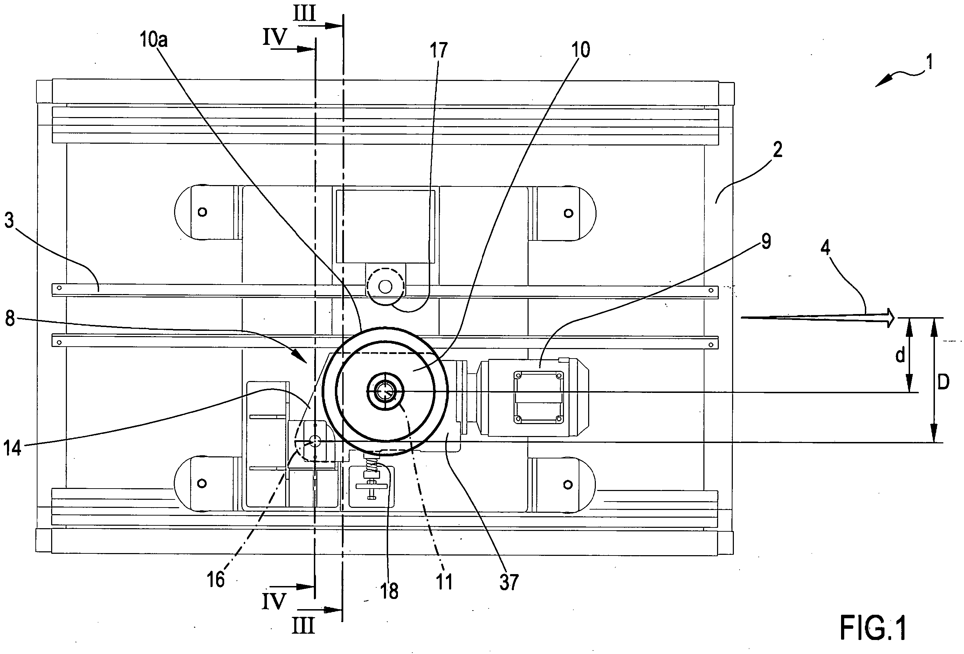

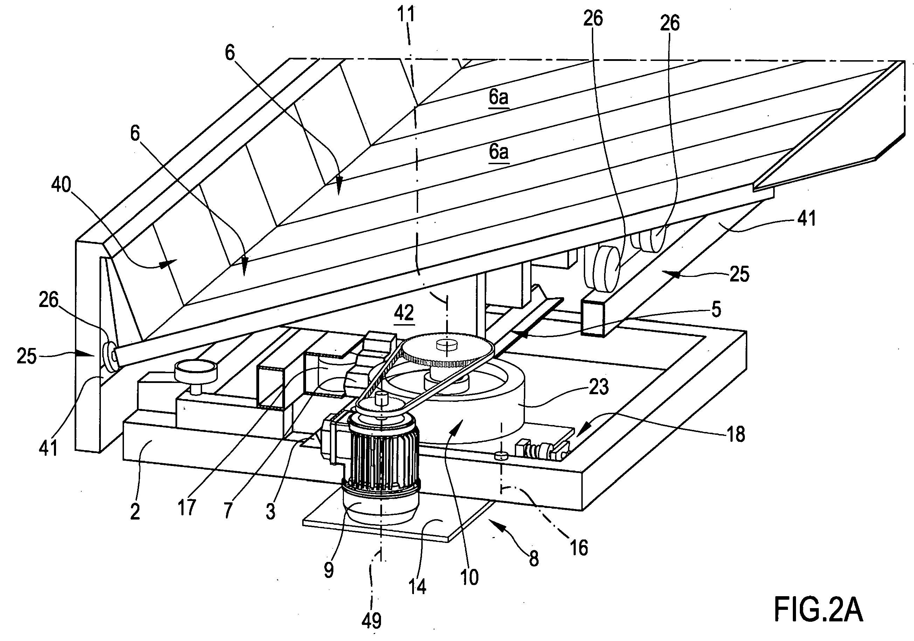

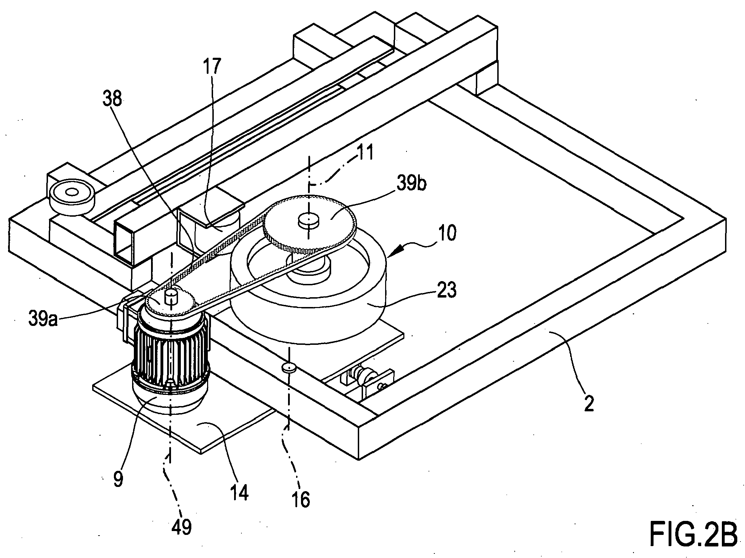

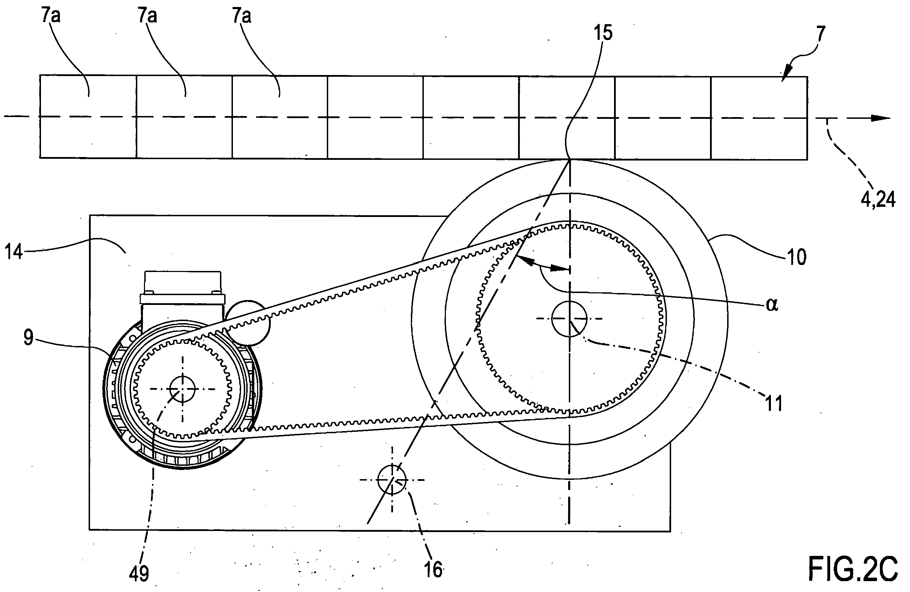

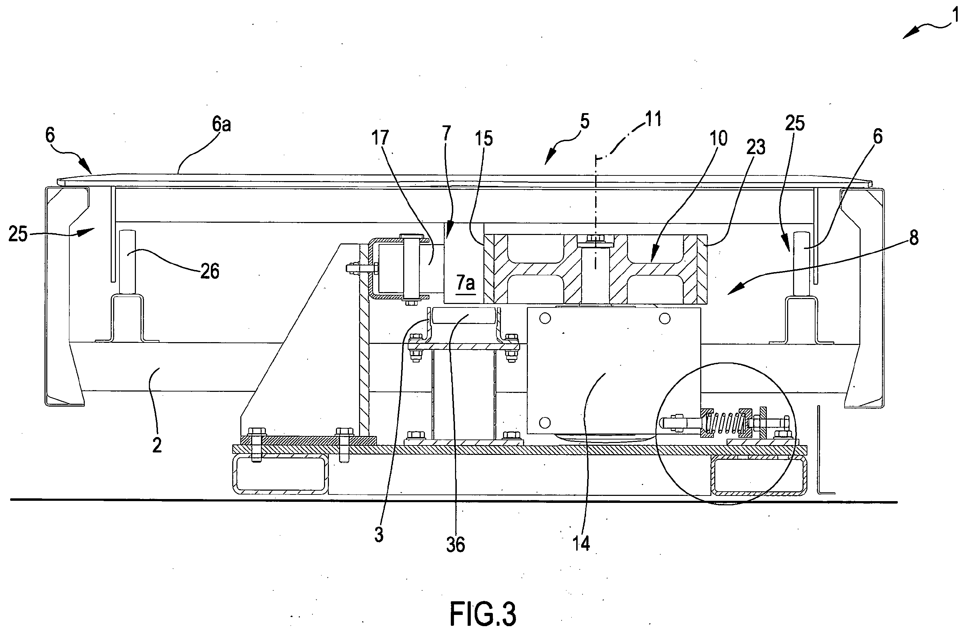

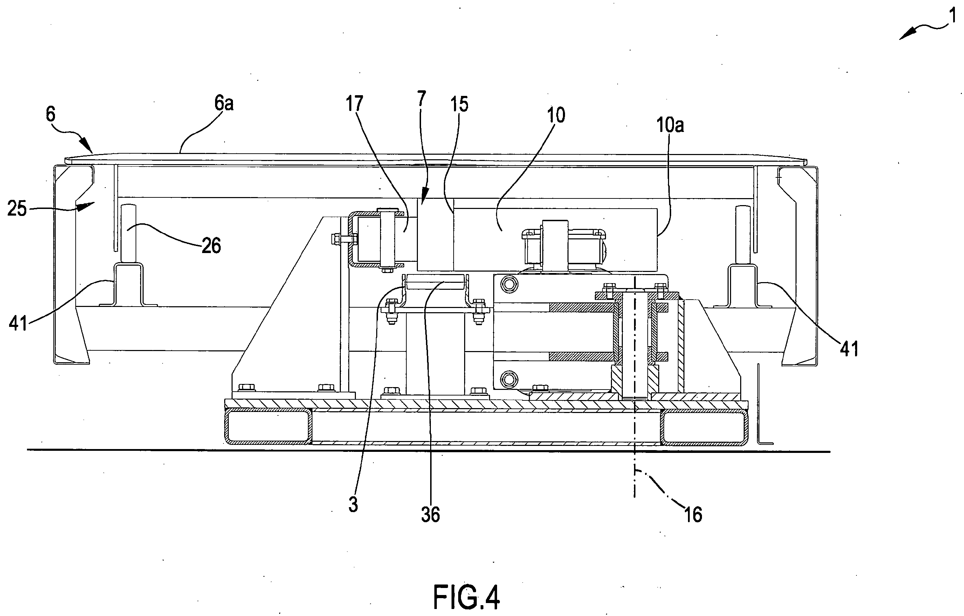

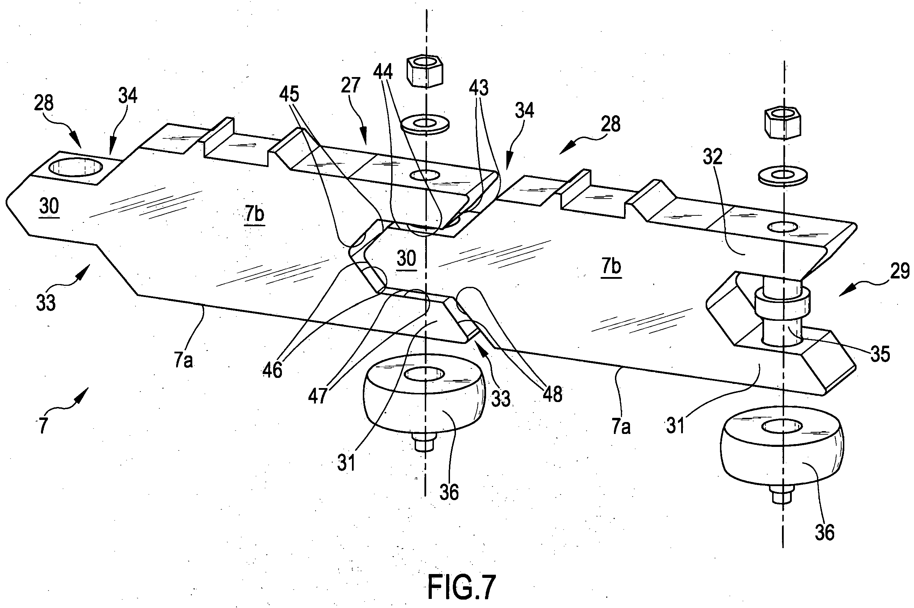

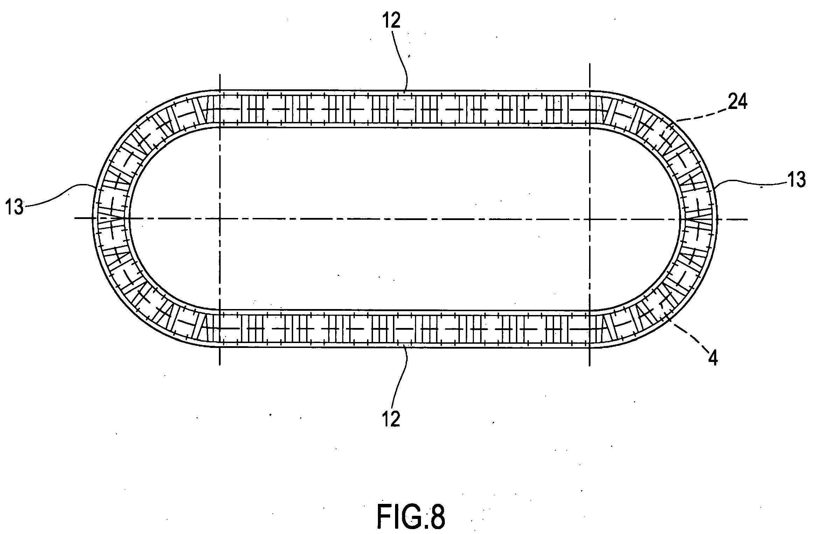

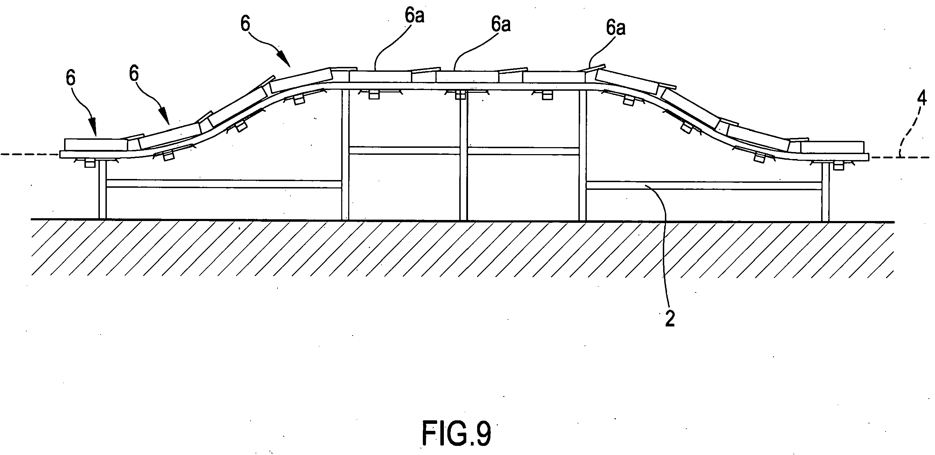

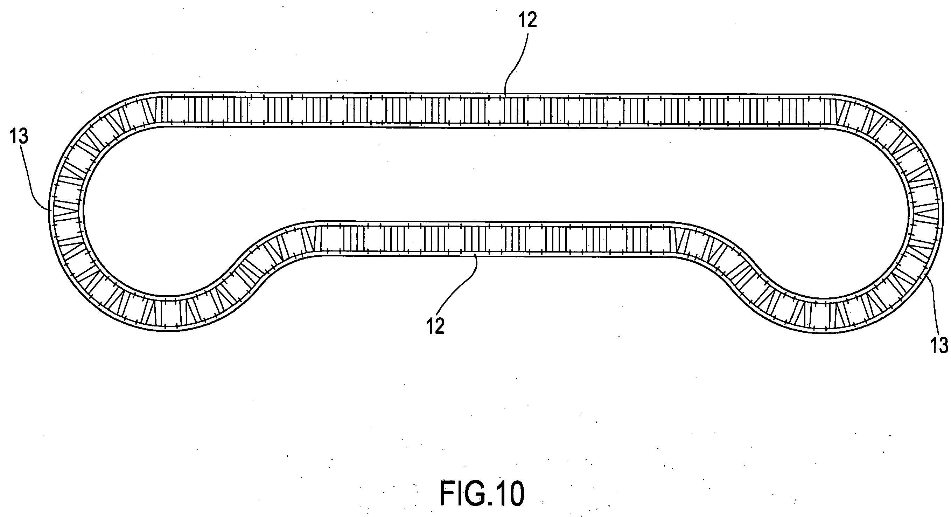

The object of the present invention is a conveyor. In particular, the conveyor described herein below is particularly suited for use with conveyor belt structures consisting of a plurality of plate-like shaped rest elements suitable for defining a continuous, articulated closed-path conveying surface such as to receive, distribute or sort materials such as baggage, packages or the like. In yet other words, the structure in the examples of embodiments described herein below is specifically intended for use in the airport facility sector in luggage check-in (or collection/sorting) operations. Yet it should be noted that the technical principles on which the invention is based are equally applicable to different sectors and can be utilized with additional embodiments of the conveyor system without deviating from the concept of the invention as specified in the claims. Observing Figures 1 and 2 in particular, one notes that the conveyor is equipped with a rigid support frame 2, which comprises and defines at least one guide 3 that extends along a movement line 4 so as to define a closed-operating path. In general, the conveyor also comprises a conveyor structure 5 exhibiting a plurality of rest elements 6 having an upper surface 6a intended to receive an item (such as a piece of luggage for example) and to convey it along a movement line 4 from the drop-off area to the pickup area or vice versa. In general, the rest elements 6 will consist of a plurality of plate-like shaped elements separated one from the other and only partially overlapping so as to define a continuous conveying surface (see for example figures 8 to 10), ensuring the continuity of that surface even in the curved portions thereof, where the various rest elements 6 overlapping each other can slide and rotate in relation to each other, increasing/decreasing the overlapping surface without creating breaks in continuity or gaps in the support of the item being conveyed. The rest elements 6 may, for example, be guided by means of two respective, continuous guides, such as two guides that are "C"-shaped and suitable for receiving the lateral ends of each one of the rest elements 6 and for permitting the relative travel thereof in the direction of advancement along the movement line 4. Alternatively, these elements may be exclusively rested against the frame 2. The partially overlapped configuration of the rest elements 6 is for example observable in Figure 9. Note also that the upper surface 6a of the rest elements 6 may be utilized either in the flat configuration (figure 3) or in the inclined configuration (figure 2), in this latter case, accompanied by a side support panel 40 such as to receive in a resting position the articles conveyed that will be found in this situation near a collection side of the conveyor. It is also possible to note (figs. 2A and 3) that the conveyor structure 5 also comprises a pre-established number of support systems 25, each respectively exhibiting at least one rolling element 26, in the examples of embodiments defined as a respective roller wheel, which is suitable for moving by rolling along respective tracks 41 of the support frame 2. In particular, the support system 25 emerges in a moving away direction and downwards from the rest element 6 (at the lateral ends of the rest element 6 itself). In further detail, the rolling element 26, or rather, in general the roller wheel, has a substantially horizontal axis under in-use conditions of the conveyor, which, during the advancement motion of the rest element 6, provides lateral support thereto and rolls over the track 41 cited, ensuring advancement uniformity. It is evident that additional, different support systems 25 can be utilized in similar manners and also that the support systems 25 themselves positioned at opposite ends of the rest element 6 can be of different heights such as to position the resting surface 6a of the element 6 in a more or less inclined manner, in this regard, see Figures 2A and 3. The conveyor structure 5 is also equipped with a drawing element 7 generally consisting of an articulated chain described in detail below. The conveyor structure 5 is in particular guided in motion by the guide 3 and is mobile in relation thereto along the cited movement line. In particular, it is the drawing element 7 (or, a chain) that will be guided on the support frame 2, drawing the respective rest elements 6. By way of example, the drawing element 7 will consist of a plurality of discrete bodies 7a that are articulatedly constrained to one another, each being suitably constrained to a respective rest element 6 to be drawn (see for example figure 7). Note that the constraint may be direct, on the underside of the rest element 6, or indirect by means of interpositioning of one or more connection elements 42 (figure 2 shows triangular connection elements 42 capable of configuring the corresponding rest element 6 in an inclined state). In any case, owing to the configuration of the constraint to the various rest elements 6, the drawing element 7, and in particular the various discrete bodies 7a constituting the latter, will guarantee the relative positioning thereof when in an overlapping state, preventing them from distancing in a longitudinal direction (that is, along the movement line 4), in fact rendering the conveyor structure 5 solidly constrained (though provided with some degrees of freedom internally) during advancement motion. The conveyor 1 is also provided with a movement system 8, which is active on the conveyor structure 5 such as to transfer motion thereto. For this purpose, the movement system 8 comprises at least one actuator 9, which in the specific embodiment, is made up of a motor and in detail by an electric motor of the brushless type. The movement system 8 also comprises at least one drive transmission wheel 10 that is coupled to the cited motor/actuator 9 by means of a suitable transmission. The wheel 10 is configured such as to be activated in rotation about an axis 11 thereof, so as to enable transfer by contact (friction) the motion to said drawing element 7. In the explanatory examples shown, the rotation axis 11 of the transmission wheel 10 is positioned substantially vertically (with respect to in-use conditions of the conveyor) and the motion is transferred by friction that is generated at the external cylindrical, peripheral surface 10a of the transmission wheel 10, which is in contact with a drawing surface 7b, particularly a lateral one, of the drawing element 7, as also clarified more fully herein below. Observing the figures, and particularly Figure 3, one notes that the transmission wheel 10 comprises a suitable friction element 23, that is, an element provided with a sufficient coefficient of friction, suitable elasticity, and capable of ensuring optimal transmission of movement by dragging. In particular, the friction element 23 is arranged on a radial surface of the wheel 10 and is in fact made up of a rubberized annular portion. Specifically, it is the rubberized surface that comes into contact with the drawing element 7 such as to transfer motion. As can be seen in Figure 3, the transmission wheel 10 has a lightened, internal structure, for example of metal, and a continuous, rubberized annular structure (friction element 23) covering the entire radial surface of the transmission wheel. To be more specific, it should be noted that the rotation axis 11 of the transmission wheel 10 is not stationary, but proves instead to be mobile with respect to the support frame and/or the drawing element 7. Advantageously, one can note that the movement system 8 comprises at least one connecting element 14, which is substantially defined by a plate that supports the actuator 9 (or, the motor) and the transmission wheel 10, in addition to the transmission means for bringing the motion from the motor to the axis 11 of the wheel. The connecting element 14 is arranged on the structure in such a manner as to enable a solidity in movement of the actuator 9 and the transmission wheel 10, with respect to the support frame 2. In particular, the connecting element 14 is hinged to the support frame, enabling nearing/distancing of the rotation axis 11 of the transmission wheel 10 to and from the movement line 4, that is, to and from the drawing element 7. In yet other words, the movement system 8 substantially constitutes a rigid structure that is mobile about a vertical axis of movement 16 that can be clearly seen in Figure 2B and in Figure 4. Thus, the transmission wheel 10 is configured such as to move rotatingly (particularly to tilt) about the movement axis 16 and the motor 9 follows it rigidly in its motion in such a manner that even the relative means for transmission of the motion itself proves to be simplified. In the example in Figure 1, the transmission means is defined by a gear motor 37, which, however, could exhibit some noise-related drawbacks. Figures 2A and 2B illustrate alternative transmission means comprising a belt 38 that transmits motion between two pulleys 39a and 39b, respectively constrained solidly to the actuator 9 and to the transmission wheel 10. In this configuration, the motor 9 has a vertical axis 49 and the ratio between the teeth on the pulleys 39a, 39b defines the transmission reduction ratio. Note in particular that the movement axis 16 is substantially parallel to the rotation axis 11 of the transmission wheel 10; in the specific embodiment, the same axes are arranged vertically. In detail, the movement axis 16 is arranged upstream with respect to the rotation axis 11 of the transmission wheel 10 in relation to the advancement/travel direction of the drawing element 7. Furthermore, the movement axis 16 is found at a distance "D" from the movement line 4 that is greater than the distance "d" between the rotation axis 11 and the movement line 4. In this manner, a specific positioning relation is defined in the longitudinal direction (the direction of advancement of the drawing element 7 or of the movement line 4) and in the transversal direction, which are both important for the functioning of the conveyor. In fact, note that this configuration is such as to permit the transmission wheel 10, during use, to move automatically near the drawing element 7 or away from it to some extent, while always maintaining contact at the contact surface 15, where motion is transmitted, adapting the thrust against the load resistance that is generated on the drawing element 7. In fact, in the event of the load increasing on the rest elements 6, the motion resistance of the drawing element 7 would increase, that is, a direct force would be generated in a direction opposite the advancement direction of the drawing element 7. The type of contact between the transmission wheel 10 and the drawing element 7, as well as the particular positioning of the movement axis 16 and rotation axis 11, both act in such a manner as to ensure that at the mobile rotation axis 11 of the wheel 10, a force is generated directed in the same direction as the force of resistance (due to the coupling geometry and to the direction of rotation of the wheel 10), that is, in this specific case, in a direction opposite the advancement direction of the drawing element 7. As the rotation axis 11 of the wheel is free to tilt about the movement axis 16, this will lead to a slight rotation counter clockwise in the configuration shown in Figure 1, which will cause the rotation axis 11 of the transmission wheel to move backwards with respect to the advancement direction of the drawing element 7, while at the same time, bringing about a nearing movement in a transversal direction, that is, it will result in a reduction of the distance "d" between them. The second effect (nearing in a transversal direction) will increase the pressure at the contact surface 15 and thus enable the transmission wheel 10 to transmit a greater force, thereby compensating the increase in resistance generated on the drawing element 7. In the reverse situation, the exact opposite effect is created, that is, in the presence of a reduction of the resistance force (for example following a reduction of the load on the rest elements 6), the resistance offered to motion by the drawing element 7 decreases and that entails the generating, at the rotation axis 11 of the wheel, of a variation in force, reducing it in terms of the absolute value with respect to the variation present in the preceding situation. As the rotation axis 11 is mobile rotatingly about the movement axis 16, this entails a distancing of the two axes in the advancement direction of the drawing element 7 and, correspondingly, an increase in the distance "d" between the rotation axis 11 and the drawing element 7. The contact is maintained, but the thrust transmitted proves to be lower in terms of the absolute value, thus ending up compensating the decrease in load resistance. In this manner, the system manages to self-adapt to variations in resistance force present on the drawing element, automatically and above all, rapidly and with no need for controls of an electronic sort. Note also that the presence of the two axes, that is, the movement axis 16 and rotation axis 11, parallel to one another and parallel to the contact surface 15, enables the latter to maintain its condition of planarity on the drawing element 7 at all times, thereby ensuring that wear on the rubberized friction element 23 is uniform. Lastly, observing Figure 7, in which a part of the drawing element 7 is represented, the following should be noted. Above all, the drawing element 7 comprises a plurality of discrete bodies 7a successively connected to one another and aligned along the connecting line 24. The discrete bodies 7a defining the drawing element 7 generally move with one drawing the other, but they are also configured such as to be able to move relatively to one another. In particular, they are configured such as to be able to rotate with respect to one another in substantially horizontal plane, or, about a vertical axis defined by a connection element 35 such as a suitable pin for example. In other words, the transmission wheel 10 can move towards/away (even if by pre-established minimum and maximum shifts in movement, as previously clarified, with respect to the drawing element 7, in such a manner as to exert different pressures, under in-use conditions, or under coupling conditions by contact or friction between the transmission wheel 10 and the drawing element 7. In further detail, the contact surface of the transmission wheel 10 is defined by an external cylindrical surface 10a of the wheel itself that proves to have generatrices parallel to the rotation axis 11. The rotation axis 11 is also the axis of symmetry so as to ensure transmissions of force that are as homogeneous as possible on the drawing element 7. In further detail, the drawing element 7 will offer a substantially flat surface (drawn surface 7b) destined for contact with the external cylindrical surface 10a of the transmission wheel 10. The contact surface 15 of the transmission wheel may be in direct contact, thereby engaging, without the interposition of any element, the flat surface of the drawing element 7, or even in indirect contact, that is, by means of the interposition of an additional body or element for transmitting force, which can be for example defined by a suitable belt or band in the event that the use of configurations with more transmission wheels 10 that transmit motion solidly with respect to one another is desired. In any case, note that the movement system 8 is configured such as to maintain the resting surface 15 in contact with the drawing element 7 during operation of the conveyor. The movement system 8 is also configured so as to ensure that the generatrix of the external cylindrical surface 10a of the transmission wheel 10 is always contained within the surface 7b for resting the transmission wheel 10 against the drawing element 7. In yet other words, the flat surface 7b of the drawing element 7 where the contact takes place, will always receive the external cylindrical surface 10a of the transmission wheel 10 in a planar resting position, or, under operating conditions, the resting surface 15 of the transmission wheel 10 will define a continuous contact surface starting from one end to the other of the external cylindrical surface 10a. The above will also be guaranteed by the fact that the rotation axis 11 of the wheel will always remain parallel to the plane defined by the drawn surface 7b of the drawing element 7. Note that the geometric coupling condition described hereinabove can be obtained by enabling motion of the rotation axis 11 of the transmission wheel 10 about a respective movement axis 16, thus by means of an exclusively rotating motion. Yet in examples that are not described herein below, a rototranslational motion of the rotation axis 11 could be used with respect to the drawing element 7, which in any case is able to guarantee the condition of parallelism between the rotation axis 11 of the transmission wheel 10 and the substantially flat drawn surface 7b of the drawing element. Note, however, that the specific embodiment illustrated shows a movement axis 16 that is parallel to the rotation axis 11 and that optionally these axes are also orthogonal to the direction of motion of the drawing element 7. It should thus also be noted that the actuator 9 (in general the activation motor) shall also be mobile with respect to both the support frame 2 and the drawing element 7. The actuator 9 and the transmission wheel 10 move solidly with respect to both the support frame 2 and the drawing element 7. For this purpose, the same elements 9, 10 are connected to one another for example by means of at least the cited connecting element 14, which in the embodiment illustrated is defined by a support plate configured such as to sustain the actuator 9 and the transmission wheel 10, as well as the motion transmission mechanisms between the two elements. The connecting element 14 proves to be the structural part of the apparatus that enables solidity in movement of the actuator 9 and the transmission wheel 10 with respect to the support frame 2. This latter connecting element 14 is constrained to the support frame and it is the element that enables nearing/distancing of the rotation axis 11 of the transmission wheel 10 with respect to the movement line. In light of the above, not only does the transmission wheel 10 move rotatingly about the movement axis 16, but the actuator/motor 9 also carry out the same rotating movement about that same axis 16. It should be stressed that advantageously the movement axis 16 is positioned upstream of the rotation axis 11 of the transmission wheel 10 in relation to the direction of travel of the drawing element 7. In other words, the drawing element 7, or in general one of the modules 7a thereof, advances along the movement line 4 and encounters first the movement axis 16 and then the rotation axis 11 of the transmission wheel 10. The straight line joining the movement axis 16 and the rotation axis 11 intersects the movement line 4 and with the latter, it forms an acute angle. The movement described above enables nearing/distancing of the contact surface 15 from the drawing element 7 increasing/decreasing the pressure exerted by the latter on the drawing element 7 itself. In particular, the acute angle α that is formed between the straight line joining the movement axis 16 with the point of contact at the contact surface 15 and the perpendicular to the movement line 4 (see figure 2C) is relevant. To ensure optimal functioning, this angle must be comprised between 25° and 40°. If it were beyond the range indicated above, it would create the risk of generating pressures that are too elevated (angles greater than 40° or pressure variations that are not sufficient to guarantee optional functioning (angles less than 25°). As can be noted in Figure 7, and as previously stated, the drawing element consists of a plurality of discrete bodies 7a successively constrained to one another such as to define a closed chain that can be driven by the transmission wheel 10. In particular, the drawing element 7 as a whole will define a closed structure coupled to the guide 3 of the support frame and that develops along the entire line of travel of the conveyor. Observing for example Figure 8, the drawing element 7 will be arranged on the closed path defined by the movement line 4 having an annular shape arranged in the plane. Instead, observing Figure 9 (which illustrates only a portion of a circular conveyor), in that portion, the drawing element 7 will develop in an articulated manner not only in a horizontal plane, but also in a vertical direction, as is also evident from the representation appearing in Figure 10. To return to the examination of the discrete bodies 7a, each one has first end portion 27 and a second end portion 28 that differ in configuration with respect to each other. However, the respective end portions 27, 28 of corresponding discrete bodies 7a with be identical to each other. The end portions 27, 28 exhibit respective faces 27a, 28a that face towards the transmission wheel 10 (and coplanar with the drawn surface 7b). Such faces prove to be substantially flat surfaces, in particular, lying in the same plane. Each one of said faces 27a, 28a exhibits a respective profile and in particular, the first profile of the end portion 27 of the discrete body 27a is complementarily shaped or substantially complementarily shaped to the second profile of the face 28a of a second end portion 28 of an immediately successive discrete body 7a. At least one tract of both the first and second profile is transversal to the rotation axis 11 of the transmission wheel 10 and each faces the other. Between the tracts transversal to the rotation axis 11 of the two profiles of end portions of successive discrete bodies 7a, a gap is defined, that is, a break in the continuity of the surface of the drawing element 7, the break also being directed transversally to the rotation axis 11 of the wheel 10. Note that a break in continuity directed transversally to the rotation axis 11 of the wheel 10 leads to transversality also with respect to the contact surface 15 of the wheel itself, in that the wheel proves to be cylindrical and the cylindrical end surface proves to have generatrices parallel to the rotation axis 11. Observing in particular the coupling zone between one discrete body 7a and the next (with reference always to figure 7), it is possible to note that the first and second profiles respectively exhibit, from the top downwards, a first tract 43 that is inclined with respect to the prevalent direction of development of the drawing element 7 (directed in the same manner as the movement line 4), a second tract 44 that is parallel to said direction of development, a third tract 45 that is inclined in the same direction as the first tract 43, a fourth tract 46 that is inclined in the opposite direction and in particular, symmetrical to the third tract 45, with respect to an axis of symmetry that is coincident to the axis of development of the drawing element 7, a fifth tract 47 that is parallel to the axis of development and in particular, symmetrical with respect to the same axis in relation to the second tract 44 and a sixth tract 48 that is inclined with respect to the axis of development and in particular, symmetrical to the first tract 43 with respect to the same axis. In any case, regardless of the above-described specific geometry of the end profiles of the surfaces 27a, 28a, the fact that the first and second profiles exhibit a symmetry with respect to the axis of longitudinal development and that this symmetry is specular with respect to an axis passing through the centre line of the end portions 27, 28 is an advantageous feature. Observing the end portions overall, note that the end portion 27 comprises at least one seating 29 suitable for accommodating at least one projection 30 of the second end portion 28. In an alternative embodiment that is not illustrated, the end portion 27 could exhibit a plurality of seatings and the second end portion 28 of an adjacent discrete body 7a could represent a plurality of projections, each of the seatings being apted to collect one or more of the above cited projections. To return to the embodiment shown in Figure 7, the first end portion 27 comprises a first auxiliary body 31 and an auxiliary body 32 opposite one another and intended to define the seating 29 cited; in a mirror-like fashion, the second end portion 28 exhibits a central projection 30 configured such as to be inserted in the seating cited, while the first and second auxiliary bodies 31, 32 are inserted in corresponding housings or recesses 33, 34 of the second end portion 28. Obviously, the first and second auxiliary bodies 31, 32 are complementarily shaped at the housings 33, 34 and the seating 29 is complementarily shaped to the respective central projection 30. Note that the two profiles of the first surface 27a and the second surface 28a, and in general the entire first portion 27 and second portion 28 prove to be complementarily shaped with respect to one another, but they are slightly distanced from one another. The above serves to enable relative movement between two successive discrete bodies 7a, as clarified more fully herein below. It is evident that if the surfaces of the profiles, as well as the portions, were in direct contact, no relative movement would be possible, as a rigid body would be substantially defined. Note also that two successive discrete bodies 7a are coupled by means of connection elements 35 configured such as to permit an articulated coupling. In particular, the connection element 35 is substantially arranged in the proximity of the first and second end portions 27, 28, in particular, crossing through them in a direction transversal to the axis of development of the drawing element 7. In general, the connection element 35 will be arranged with development that is parallel to the development of the axis 11 of the wheel. Two successive discrete bodies 7a are mobile relatively to one another at least according to an axis arranged vertically and in general coinciding with the axis of the connection element 35. In this manner, curved paths can be defined in a horizontal plane. Additionally, each discrete body 7a is mobile relatively to the immediately successive coupled discrete body, also according to a substantially horizontal axis, such as to permit relative inclinations between successive discrete bodies 7a in a vertical plane, thus enabling the conveyor element to move in an articulated manner and define up-and-down paths as well. Lastly, note that the connection element 35 exhibits for example at the lower portion, a guide element 36 that can enable, particularly in cooperation with the guide elements of successive connection elements 35 the entire conveyor element 7 to be guided. In particular, this guide element is defined by a suitable roller wheel idlingly mounted on the axis of development of the connection element 35 and is guided in motion by the guide 3 of the frame 2 (see figure 3). The embodiments described hereinabove achieve important advantages. In the first place, the conveyor described, and particularly the movement system, are capable of maintaining a level rest surface of the wheel 10 on'the drawing element 7 at all times, thus preventing wear that is not uniform on the wheel, as well as the introduction of thrusts that are not homogeneous. Furthermore, the system is capable of self-regulation of thrust based on the load, that is, based on the resistance offered on the drawing element, thus enabling the adoption of configurations of optimal powers and transmissions. Moreover, the adoption of a special drawing element configured in such a manner as to not exhibit discontinuities that can affect the entire contact surface of the drawing wheel during the transport operation, prevents the generation of noise and vibrations. In fact, the above makes it unnecessary to utilize additional wheels coupled by means of a conveyor belt that functions as an interface with the conveyor element such as to prevent breaks in the continuity of the discrete bodies from leading to jerking movements of the belt.

## Claims

1. A conveyor (1) comprising:
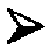 a support frame (2) comprising at least one guide (3), which develops along a movement line (4) defining a closed operating path,
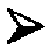 a conveyor structure (5) comprising at least one rest element (6) and a drawing element (7) configured such as to transfer motion to the rest element (6), said conveyor structure (5) being guided in motion by the guide (3) and being mobile in relation thereto along the movement line (4),
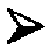 a movement system (8) comprising:
• an actuator (9),
• at least one drive transmission wheel (10) coupled to said actuator (9) and configured such as to be activated in rotation about an axis (11) thereof, the transmission wheel (10) exhibiting an external cylindrical surface (10a) having an axis of symmetry coinciding with the rotation axis (11), the rotation axis (11) of the wheel being mobile with respect to the support frame (2) and the drawing element (7) such as to increase/reduce a pressure of the external cylindrical surface (10a) on a drawn surface (7b) of the drawing element (7), said transmission wheel (10) and said actuator (9) are connected to one another;
the movement system (8) being configured such as to maintain the rotation axis (11) of the transmission wheel (10) parallel to the drawn surface (7b) of the drawing element (7) during movement of the axis (11) with respect to the drawing element, guaranteeing a planarity of contact between the external cylindrical surface (10a) and the drawn surface (7b);
said movement system (8) comprises at least one connecting element (14) configured such as to support the actuator (9) and the transmission wheel (10), said connecting element (14) being configured such as to enable a solidity in movement of the actuator (9) and the transmission wheel (10) with respect to the support frame (2), said connecting element (14) being engaged to the support frame (2) and is configured such as to enable nearing and distancing of the rotation axis (11) of the transmission wheel (10) with respect to the movement line (4), said transmission wheel (10) being configured such as to move rotatingly about a movement axis (16), said movement axis (16) being arranged upstream of the rotation axis of the transmission wheel (10) in relation to the direction of travel of the drawing element (7), **characterized in that**
said movement axis (16) is situated at a distance (D) from the movement line (4) that is greater than the distance (d) between the rotation axis (11) of the transmission wheel (10) and the movement line (4), and an angle (α) defined by the intersection of a straight line passing through the movement axis (16) and through a contact surface (15) between the movement system (8) and the drawing element (7) with the straight line perpendicular to the development direction of the drawing element (7) is comprised between 25 and 40 degrees.

2. The conveyor of claim 1, wherein said actuator (9) is mobile with respect to both the support frame (2) and the drawing element (7), in particular said actuator (9) and said drawing wheel (10) moving solidly with respect to both the support frame (2) and the drawing element (7).

3. The conveyor of any one of the preceding claims, wherein the connecting element (14)comprises a plate.

4. The conveyor of any one of the preceding claims, wherein said movement axis (16) is substantially parallel to the rotation axis (11) of the transmission wheel (10).

5. The conveyor of any one of the preceding claims, wherein said drawing element (7) comprises a plurality of discrete bodies (7a) successively connected to one another and aligned along a connecting line (24), said discrete bodies (7a) being configured such as to move relatively to one another, and wherein said discrete bodies (7a) are configured such as to rotate with respect to one another in at least one reference plane, in particular in a plane that is substantially horizontal, and are optionally configured such as to rotate with respect to one another about axes that are reciprocally transversal.

6. The conveyor of any one of the preceding claims, wherein said discrete bodies (7a) each exhibit a first and a second end portion (27, 28) having respective faces (27a, 28a) facing towards said transmission wheel (10), the surface (27a) of said first end portion (27) of a discrete body (7a) having a first profile that is substantially complementarily shaped to a second profile of the face (28a) of a second end portion (28) of an immediately successive discrete body (7a), at least one tract of the first and a second profile being transversal to the rotation axis (11) of the transmission wheel (10) defining a break in the continuity of the drawing surface (7b) of the drawing element (7) directed transversally to the rotation axis (11) of the wheel (10).

7. The conveyor of claim 6, wherein said first end portion (27) comprises a first auxiliary body (31) and a second auxiliary body (32), the first auxiliary body (31) and the second auxiliary body (32) being opposite one another such as to define a seating (29), and wherein said second end portion (28) exhibits a central projection (30) configured such as to be inserted, under in-use conditions, in the seating (29), said first auxiliary body (31) and the second auxiliary body (32) inserting themselves in corresponding housings (33, 34) of said second end portion (28).

8. The conveyor of claim 6 or 7, wherein said first end portion (27) comprises a first auxiliary body (31) and a second auxiliary body (32), said first auxiliary body (31) and the second auxiliary body (32) being opposite one another such as to define a seating (29), and wherein said second end portion (28) exhibits a central projection (30) configured such as to be inserted under in-use conditions in the seating (29), said first auxiliary body (31) and second auxiliary body (32) inserting themselves in corresponding housings (33, 34) of said second end portion (28).

## Patentansprüche

1. Förderband (1), umfassend:
- einen Trägerrahmen (2) umfassend mindestens eine Führung (3), die sich entlang eine Bewegungslinie (4) entwickelt, einen geschlossenen Betriebspfad definierend,
- eine Förderbandstruktur (5) umfassend mindestens ein Auflageelement (6) und ein Zugelement (7), das konfiguriert ist, dem Auflageelement (6) Bewegung zu verleihen, wobei die Förderbandstruktur (5) in Bewegung durch die Führung (3) und in beweglicher Relation dazu entlang der Bewegungslinie (4) geführt wird,
- ein Bewegungssystem (8) umfassend:
• einen Aktuator (9),
• mindestens ein Antriebsübertragungsrad (10), gekoppelt an den Aktuator (9) und konfiguriert, um in Rotation um eine Achse (11) dessen aktiviert zu werden, wobei das Übertragungsrad (10) eine externe, zylindrische Oberfläche (10a) besitzt, die eine Symmetrieachse aufweist, die mit der Rotationsachse (11) zusammenfällt, wobei die Rotationsachse (11) des Rades in Bezug auf den Trägerrahmen (2) und das Zugelement (7) beweglich ist, um einen Druck der externen, zylindrischen Oberfläche (10a) auf eine gezogene Oberfläche (7b) des Zugelements (7) zu erhöhen/verringern, wobei das Übertragungsrad (10) und der Aktuator (9) miteinander verbunden sind; wobei das Bewegungssystem (8) konfiguriert ist, um die Rotationsachse (11) des Übertragungsrades (10) während der Bewegung der Achse (11) in Bezug auf das Zugelement parallel zur gezogenen Oberfläche (7b) des Zugelementes (7) zu halten, wodurch eine Ebenheit des Kontakts zwischen der externen, zylindrischen Oberfläche (10) und der gezogenen Oberfläche (7b) garantiert wird;
wobei das Bewegungssystem (8) mindestens ein Verbindungselement (14) umfasst, das konfiguriert ist, um den Aktuator (9) und das Übertragungsrad (10) zu tragen, wobei das Verbindungselement (14) konfiguriert ist, eine Festigkeit der Bewegung des Aktuators (9) und des Übertragungsrades (10) in Bezug auf den Trägerrahmen (2) zu ermöglichen, wobei das Verbindungselement (14) sich in Eingriff mit dem Trägerrahmen (2) befindet und konfiguriert ist, um ein Annähern und Entfernen der Rotationsachse (11) des Übertragungsrades (10) in Bezug auf die Bewegungslinie (4) zu ermöglichen, wobei das Übertragungsrad (10) konfiguriert ist, um sich rotatorisch um eine Bewegungsachse (16) zu bewegen, wobei die Bewegungsachse (16) aufwärts der Rotationsachse des Übertragungsrades (10) im Verhältnis zur Laufrichtung des Zugelements (7) angeordnet ist, **dadurch gekennzeichnet, dass** die Bewegungsachse (16) in einer Entfernung (D) von der Bewegungslinie (4) liegt, die größer ist, als eine Entfernung (d) zwischen der Rotationsachse (11) des Übertragungsrades (10) und der Bewegungslinie (4),
und ein Winkel (α), definiert durch den Schnittpunkt einer Geraden, die durch die Bewegungsachse (16) und durch eine Kontaktoberfläche (15) zwischen dem Bewegungssystem (8) und dem Zugelement (7) verläuft, mit der Geraden, die rechtwinklig zur Entwicklungsrichtung des Zugelements (7), zwischen 25 und 40 Grad beträgt.

2. Förderband nach Anspruch 1, wobei der Aktuator (9) in Bezug auf sowohl den Trägerrahmen (2), als auch das Zugelement (7) beweglich ist, insbesondere wobei der Aktuator (9) und das Zugrad (10) sich in Bezug auf sowohl den Trägerrahmen (2), als auch das Zugelement (7) fest bewegen.

3. Förderband nach einem der vorhergehenden Ansprüche, wobei das Verbindungselement (14) eine Platte umfasst.

4. Förderband nach einem der vorhergehenden Ansprüche, wobei die Bewegungsachse (16) im Wesentlichen parallel zur Rotationsachse (11) des Übertragungsrades (10) ist.

5. Förderband nach einem der vorhergehenden Ansprüche, wobei das Zugelement (7) eine Vielzahl von diskreten Körpern (7a) umfasst, die aufeinanderfolgend miteinander verbunden und entlang einer Verbindungslinie (24) ausgerichtet sind, wobei die diskreten Körper (7a) konfiguriert sind, um in Bezug auf einander mindestens in einer Referenzebene zu rotieren, insbesondere in einer Ebene, die im Wesentlichen horizontal ist, und die wahlweise konfiguriert sind, um in Bezug aufeinander um Achsen zu rotieren, die wechselseitig transversal zueinander sind.

6. Förderband nach einem der vorhergehenden Ansprüche, wobei die diskreten Körper (7a) jeweils einen ersten und zweiten (27, 28) Endbereich besitzen, die respektive Flächen (27a, 28a) aufweisen, die zum Übertragungsrad (10) zugewandt sind, wobei die Oberfläche (27a) des ersten Endbereiches (27) eines diskreten Körpers (7a) ein erstes Profil aufweist, das im Wesentlichen komplementär geformt ist zu einem zweiten Profil der Oberfläche (28a) eines zweiten Endbereiches (28) eines unmittelbar anschließenden diskreten Körpers (7a), wobei mindestens ein Abschnitt des ersten und zweiten Profils transversal zur Rotationsachse (11) des Übertragungsrades (10) ist, eine Unterbrechung in der Durchgängigkeit der Zugoberfläche (7b) des Zugelements (7) definierend, die transversal zur Rotationsachse (11) des Rades (10) gerichtet ist.

7. Förderband nach Anspruch 6, wobei der erste Endbereich (27) einen ersten Hilfskörper (31) und einen zweiten Hilfskörper (32) umfasst, wobei der erste Hilfskörper (31) und der zweite Hilfskörper (32) einander gegenüber liegen, um eine Aufnahme (29) zu definieren, und wobei der zweite Endbereich (28) eine zentrale Projektion (30) besitzt, die konfiguriert ist, während der Benutzung in die Aufnahme (29) eingesetzt zu werden, wobei der erste Hilfskörper (31) und der zweite Hilfskörper (32) sich selbst in entsprechende Gehäuse (33, 34) des zweiten Endbereichs (28) einsetzen.

8. Förderband nach Anspruch 6 oder 7, wobei der erste Endbereich (27) einen ersten Hilfskörper (31) und einen zweiten Hilfskörper (32) umfasst, wobei der erste Hilfskörper (31) und der zweite Hilfskörper (32) einander gegenüber liegen, um eine Aufnahme (29) zu definieren, und wobei der zweite Endbereich (28) eine zentrale Projektion (30) besitzt, die konfiguriert ist, während der Benutzung in die Aufnahme (29) eingesetzt zu werden, wobei der erste Hilfskörper (31) und zweite Hilfskörper (32) sich selbst in entsprechende Gehäuse (33, 34) des zweiten Endbereichs (28) einsetzen.

## Revendications

1. Convoyeur (1) comprenant:
➢ un cadre de support (2) comportant ou moins un élément de guidage (3), qui se déplace le long d'une ligne de déplacement (4) définissant une trajectoire de fonctionnement fermée,
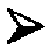 une structure de convoyeur (5) comportant au moins un élément de support (6) et un élément de traction (7) configuré de manière à transférer un mouvement à l'élément de support (6), ladite structure de convoyeur (5) étant guidée lors de son déplacement par l'élément de guidage (3) et étant mobile par rapport à ce dernier le long de la ligne de déplacement (4),
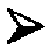 un système de déplacement (8) comprenant :
• un actionneur (9),
• au moins une roue de transmission d'entraînement (10) couplée audit actionneur (9) et configurée de manière à pouvoir être actionnée en rotation autour d'un axe (11) de cette dernière, la roue de transmission (10) présentant une surface cylindrique externe (10a) dont un axe de symétrie correspond à l'axe de rotation (11), l'axe de rotation (11) de la roue étant mobile par rapport au cadre de support (2) et l'élément de traction (7) de manière à augmenter/réduire la pression de la surface cylindrique externe (10a) sur une surface tractée (7b) de l'élément de traction (7), ladite roue de transmission (10) et ledit actionneur (9) étant reliés;
le système de déplacement (8) étant configuré de manière à maintenir l'axe de rotation (11) de la roue de transmission (10) dans une position parallèle à la surface tractée (7b) de l'élément de traction (7) lors du déplacement de l'axe (11) par rapport à l'élément de traction, assurant une planéité de contact entre la surface cylindrique externe (10a) et la surface tractée (7b);
ledit système de déplacement (8) comprend au moins un élément de raccordement (14) configuré de manière à supporter l'actionneur (9) et la roue de transmission (10), ledit élément de raccordement (14) étant configuré de manière à permettre le déplacement solidaire de l'actionneur (9) et de la roue de transmission (10) par rapport au cadre de support (2), ledit élément de raccordement (14) étant en prise avec le cadre de support (2) et étant configuré de manière à permettre le rapprochement et l'éloignement de l'axe de rotation (11) de la roue de transmission (10) par rapport à la ligne de déplacement (4), ladite roue de transmission (10) étant configurée de manière à se déplacer en rotation autour d'un axe de déplacement (16), ledit axe de déplacement (16) étant placé en amont de l'axe de rotation de la roue de transmission (10) par rapport au sens de déplacement de l'élément de traction (7), **caractérisé en ce que**
ledit axe de déplacement (16) est situé à une distance (D) de la ligne de déplacement (4) qui est supérieure à la distance (d) séparant l'axe de rotation (11) de la roue de transmission (10) de la ligne de déplacement (4),
un angle (α) défini par l'intersection d'une ligne droite passant par l'axe de déplacement (16) et par une surface de contact (15) entre le système de déplacement (8) et l'élément de traction (7) avec la ligne droite perpendiculaire au sens de déplacement de l'élément de traction (7) se situe entre 25° et 40°,

2. Convoyeur selon la revendication 1, **caractérisé en ce que** ledit actionneur (9) est mobile par rapport au cadre de support (2) et à l'élément de traction (7), en particulier, ledit actionneur (9) et ladite roue de traction (10) se déplaçant de manière solidaire par rapport au cadre de support (2) et à l'élément de traction (7)

3. Convoyeur selon l'une quelconque des revendications précédentes, **caractérisé en ce que** l'élément de raccordement (14) comprend une plaque.

4. Convoyeur selon l'une quelconque des revendications précédentes, **caractérisé en ce que** ledit axe de déplacement (16) est sensiblement parallèle à l'axe de rotation (11) de la roue de transmission (10).

5. Convoyeur selon l'une quelconque des revendications précédentes, **caractérisé en ce que** ledit élément de traction (7) comprend une pluralité de corps discrets (7a) reliés les uns aux autres de manière successive et alignés le long d'une ligne de raccordement (24), lesdits corps discrets (7a) étant configurés de manière à pouvoir se déplacer les uns par rapport aux autres, et **en ce que** lesdits corps discrets (7a) sont configures de manière à pouvoir tourner les uns par rapport aux autres dans au moins un plan de référence, en particulier dans un plan qui est sensiblement horizontal et peuvent être éventuellement configurés de manière à tourner les uns par rapport aux autres autour d'axes qui sont réciproquement transversaux.

6. Convoyeur selon l'une quelconque des revendications précédentes, **caractérisé en ce que** lesdits corps discrets (7a) présentent chacun une première et une seconde parties d'extrémité (27,28) dotées de faces respectives (27a, 28a) orientées en direction de ladite roue de transmission (10), la surface (27a) de ladite première partie d'extrémité (27) d'un corps discret (7a) présentant une première forme qui est sensiblement complémentaire à celle d'une seconde forme de la face (28a) d'une seconde partie d'extrémité (28) d'un corps discret placé de manière adjacente immédiatement après un corps discret (7a), au moins une trajectoire de la première et de la deuxième formes étant transversale par rapport à l'axe de rotation (11) de la roue de transmission (10) définissant une rupture dans la continuité de la surface de traction (7b) de l'élément de traction (7) orienté de manière transversale par rapport à l'axe de rotation (11) de la roue (10).

7. Convoyeur selon la revendication 6, **caractérisé en ce que** ladite première partie d'extrémité (27) comprend un premier corps auxiliaire (31) et un second corps auxiliaire (32), le premier corps auxiliaire (31) et le second corps auxiliaire (32) étant situés en regard de manière à définir un appui (29), et **en ce que** ladite seconde partie d'extrémité (28) présente une projection centrale (30) configurée de manière à être insérée, lors de l'utilisation du convoyeur, dans l'appui (29), ledit premier corps auxiliaire (31) et le second corps auxiliaire (32) s'insérant eux-mêmes dans des logements correspondants (33, 34) ménagés dans ladite seconde partie d'extrémité (28).

8. Convoyeur selon la revendication 6 ou la revendication 7, **caractérisé en ce que** ladite première partie d'extrémité (27) comprend un premier corps auxiliaire (31) et un second corps auxiliaire (32), ledit premier corps auxiliaire (31) et le second corps auxiliaire (32) étant situés en regard de manière à définir un appui (29), et **en ce que** ladite seconde partie d'extrémité (28) présente une projection centrale (30) configurée de manière à être insérée, lors de l'utilisation du convoyeur, dans l'appui (29), ledit premier corps auxiliaire (31) et ledit second corps auxiliaire (32) s'insérant dans des logements correspondants (33, 34) ménagés dans ladite seconde partie d'extrémité (28).
